# EUROPÄISCHE PATENTANMELDUNG

(11) **EP 1 004 467 A2**
(43) Veröffentlichungstag der Anmeldung: **31.05.2000**
(21) Anmeldenummer: 99120040.3
(22) Anmeldetag: 18.10.1999
(51) Int. Cl.: B60K 13/04, F16L 55/033

(54) **Vorrichtung zur Befestigung einer Abgasanlage an einem Kraftfahrzeug und Vorrichtung zur elastischen Verbindung von Befestigungseinrichtungen für eine solche Abgasanlage**

(30) Priorität: 28.11.1998 DE 19855096
(71) Anmelder: Volkswagen Aktiengesellschaft, 38436 Wolfsburg (DE)
(72) Erfinder: Sjenar, Dzemal, 38444 Wolfsburg (DE)

(57) **Zusammenfassung**

Eine solche Vorrichtung zur Befestigung einer Abgasanlage an einem Kraftfahrzeug weist eine erste Befestigungseinrichtung, die eine Halterung an einer Karosserie des Kraftfahrzeuges herstellt, eine zweite Befestigungseinrichtung, die eine Halterung an einer Abgasanlage des Kraftfahrzeuges herstellt, und eine Verbindungseinrichtung auf, die die beiden Befestigungseinrichtungen miteinander verbindet, wobei die Verbindungseinrichtung zumindest einen Aufnahmeabschnitt für jede der Befestigungseinrichtungen aufweist. Zumindest eine der Befestigungseinrichtungen hat eine Mehrzahl von Fixierungsabschnitten, wobei zumindest ein Fixierungsabschnitt mit dem zumindest einen Aufnahmeabschnitt in Eingriff bringbar ist. Die Mehrzahl der Fixierungsabschnitte erlaubt es, die relative Lage der Befestigungseinrichtungen zueinander zu verändern. Hierdurch läßt sich also auch der Abstand zwischen dem Anlenkpunkt der ersten Befestigungseinrichtung an dem Kfz und dem Anlenkpunkt der zweiten Befestigungseinrichtung an der Abgasanlage verändern und an die Gegebenheiten unterschiedlicher Modelle eines Kfz anpassen. Durch eine solche Ausbildung läßt sich die relative Lagebeziehung zwischen einem Anlenkpunkt am Kfz, der Lage der Befestigungsvorrichtung sowie einem Anlenkpunkt an der Abgasanlage einfach verändern bzw. einstellen.

## Beschreibung

Die vorliegende Erfindung betrifft eine Vorrichtung zur Befestigung einer Abgasanlage an einem Kraftfahrzeug gemäß dem Oberbegriff des Patentanspruchs 1 und eine Vorrichtung zur elastischen Verbindung von Befestigungseinrichtungen für eine solche Abgasanlage gemäß dem Oberbegriff des Patentanspruchs 9.

Bekannte Vorrichtungen zur Befestigung einer Abgasanlage, beispielsweise von Rohrleitungen der Abgasanlage, umfassen zumindest eine Befestigungseinrichtung sowie eine damit zusammenwirkende elastische Verbindungseinrichtung. Die Befestigungseinrichtung dient der Fixierung der Abgasanlage relativ zu einer Karosserie eines Fahrzeuges und die elastische Verbindungseinrichtung dient dazu, eine Schwingungsabkopplung zwischen Teilen des Kraftfahrzeuges und Teilen der Abgasanlage zu erreichen.

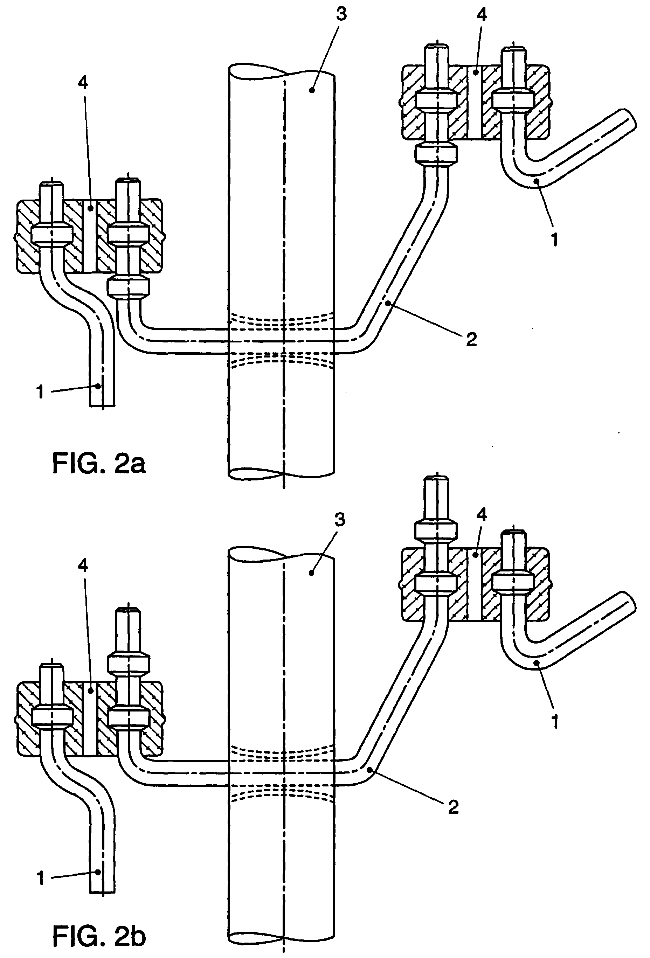

Aus der DE-PS 37 37 987 ist eine solche Befestigungsvorrichtung gemäß dem Oberbegriff des Patentanspruchs 1 bekannt. Dort ist (siehe Fig. 2) zwischen einer Karosserie 12 eines Kfz und einer Abgasanlage 9 jeweils eine Befestigungseinrichtung 11 bzw. 10 vorgesehen, die mittels einer elastischen Aufhängeöse 2 verbindbar sind. Um diese Verbindung herzustellen, umfaßt die Aufhängeöse 2 zwei Aufnahmeöffnungen 4 und 5, in die entsprechende Fortsätze der Befestigungseinrichtungen 10 und 11 eingreifen.

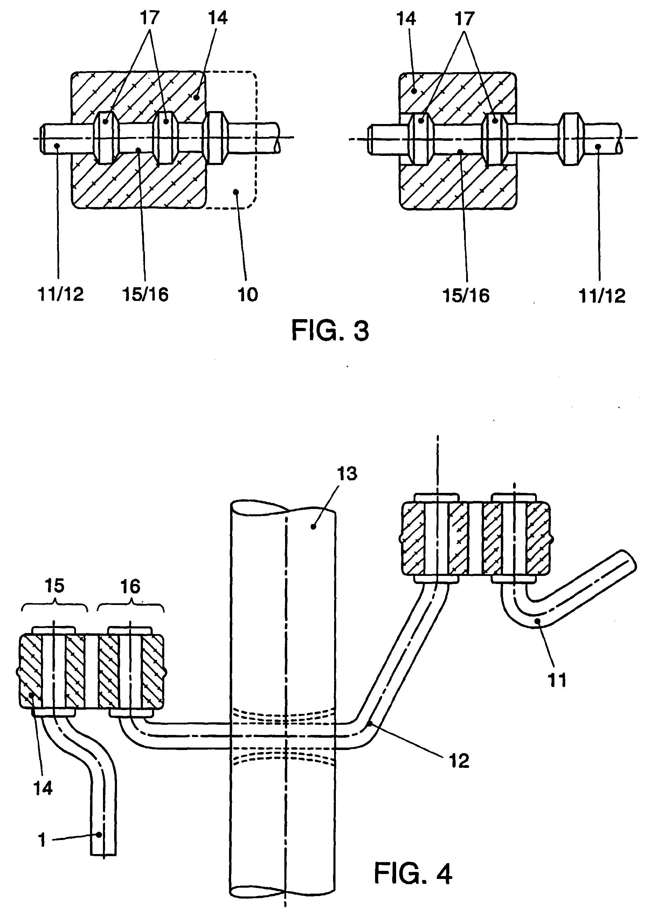

Eine ähnlich aufgebaute Vorrichtung zur Befestigung einer Abgasanlage an einem Kfz ist auch in der Figur 4 der vorliegenden Anmeldung dargestellt. Nach diesem Stand der Technik ist ein Teil einer Abgasanlage, d.h. ein Rohr 13 mittels einer beidseitig wirkenden Befestigungsvorrichtung an dem Kfz (nicht dargestellt) festgelegt. Diese Vorrichtung umfaßt eine erste Befestigungseinrichtung 11 und eine zweite Befestigungseinrichtung 12, die beide mittels einer Verbindungseinrichtung 14 verbindbar sind. Die Verbindungseinrichtung 14 weist einen ersten Aufnahmeabschnitt 15 und einen zweiten Aufnahmeabschnitt 16 auf, in den jeweils die erste 11 bzw. die zweite Befestigungseinrichtung 12 einsteckbar ist. Die erste Befestigungseinrichtung 11 ist an der Karosserie des Kfz befestigt, während die zweite Befestigungseinrichtung 12 zur Festlegung des (Abgas-) Rohres 13 dient. In der dargestellten Ausführungsform ist das Rohr 13 auf beiden Seiten (links und rechts in der Figur 4) relativ zu dem Kfz fixiert. Die Verbindungseinrichtung 14 ist elastisch ausgeführt und dient der Schwingungsentkopplung.

Die bekannten Befestigungsvorrichtungen für Abgasanlagen an Kfz haben dabei den Nachteil, daß bei einer Veränderung der Position zur Festlegung der Abgasanlage, d.h. der Position der zweiten Befestigungseinrichtung, auch eine Veränderung der Position des Anlenkpunktes der ersten Befestigungseinrichtung erfolgen muß. Nur sehr geringe Positionsabweichungen können infolge der Elastizität der Verbindungseinrichtung ausgeglichen werden.

Solche Veränderungen der Position der Abgasanlage an dem Kfz können unter anderem dann notwendig sein, wenn zum Beispiel ein Modell einer Abgasanlage bei mehreren unterschiedlichen Modellvarianten von Kfz eingebaut werden soll. Ein weiteres Beispiel ist es, wenn bei einem Kfz eine Version mit Schaltgetriebe und eine Version mit Automatikgetriebe gebaut werden soll und wenn bei beiden Varianten zwar die gleiche Abgasanlage installiert wird, jedoch die Anschlußpositionen zwischen Motor und Abgasanlage verändert sind, weil z.B. der Motor bei der Automatikversion um einen bestimmten Abstand versetzt angeordnet ist (relativ zu der Schaltgetriebeversion).

Für diese Fälle wäre eine Verschiebung der Positionen der Befestigungseinrichtungen bei den Vorrichtungen nach dem Stand der Technik erforderlich oder gar eine geänderte Abgasanlage.

Es ist daher die Aufgabe der vorliegenden Erfindung, eine Befestigungsvorrichtung für eine Abgasanlage an einem Kfz zu schaffen, die eine Einstellbarkeit der Position der Abgasanlage, relativ zu einer Karosserie des Kfz erlaubt, wobei diese Einste Ibarkeit einen deutlich größeren Spielraum gegenüber der infolge der Elastizität bestimmter Bauteile der Befestigungsvorrichtung inhärenten Beweglichkeit vorsieht.

Diese Aufgabe wird durch eine Vorrichtung zur Befestigung einer Abgasanlage an einem Kfz mit den Merkmalen gemäß dem kennzeichnenden Teil des Patentanspruchs 1 gelöst oder durch eine Vorrichtung nach dem Patentanspruch 9.

Demnach weist diese Vorrichtung zur Befestigung einer Abgasanlage an einem Kraftfahrzeug eine ersten Befestigungseinrichtung, die eine Halterung an einer Karosserie des Kraftfahrzeuges herstellt, eine zweiten Befestigungseinrichtung, die eine Halterung an einer Abgasanlage des Kraftfahrzeuges herstellt, und eine Verbindungseinrichtung auf, die die beiden Befestigungseinrichtungen miteinander verbindet, wobei die Verbindungseinrichtung zumindest einen Aufnahmeabschnitt für jede der Befestigungseinrichtungen aufweist, und wobei zumindest eine der Befestigungseinrichtungen eine Mehrzahl von Fixierungsabschnitten aufweist, wobei zumindest ein Fixierungsabschnitt mit dem zumindest einen Aufnahmeabschnitt in Eingriff bringbar ist.

Die Mehrzahl der Fixierungsabschnitte erlaubt es, die relative Lage der Befestigungseinrichtungen zueinander zu verändern. Hierdurch läßt sich also auch der Abstand zwischen dem Anlenkpunkt der ersten Befestigungseinrichtung an dem Kfz und dem Anlenkpunkt der zweiten Befestigungseinrichtung an der Abgasanlage verändern und an die Gegebenheiten leicht anpassen.

Nach Patentanspruch 9 kann die oben erwähnte Aufgabe auch durch eine Vorrichtung zur elastischen Verbindung von Befestigungseinrichtungen für eine Abgasanlage an einem Kraftfahrzeug gelöst werden, die zwei Aufnahmeabschnitte aufweist, die jeweils für die Aufnahme einer Befestigungseinrichtung vorgesehen sind, wobei zumindest ein Aufnahmeabschnitt eine Mehrzahl von in Eingriffsrichtung der Befestigungseinrichtung zueinander beabstandet angeordneten Fixierungsabschnitten aufweist, die wahlweise mit der Befestigungseinrichtung formschlüssig in Eingriff bringbar sind.

Hierdurch läßt sich ebenfalls die relative Lagebeziehung zwischen Anlenkpunkt am Kfz, Lage der Vorrichtung zum Verbinden sowie Anlenkpunkt an der Abgasanlage einfach abändern.

Vorteilhafte Weiterbildungen dieser Ausführungsformen sind der Gegenstand von Unteransprüchen.

Die Erfindung wird im folgenden anhand einer ausführlichen Beschreibung der Ausführungsformen beschrieben, die sich auf die zugehörigen Zeichnungen bezieht.

In den Zeichnungen zeigt die:
Fig. 1 eine schematische Darstellung der Vorrichtung zur Befestigung einer Abgasanlage an einem Kfz nach einer ersten Ausführungsform gemäß der vorliegenden Erfindung;
Fig. 2 eine Darstellung der Vorrichtung nach der Figur 1, wobei in der Figur 2a eine erste Position und in der Figur 2b eine zweite Position der zweiten Befestigungseinrichtung gezeigt ist;
Fig. 3 eine schematische Darstellung zweier weiterer Ausführungsformen nach der vorliegenden Erfindung; und
Fig. 4 eine schematisierte Darstellung einer Befestigungsvorrichtung nach dem Stand der Technik.

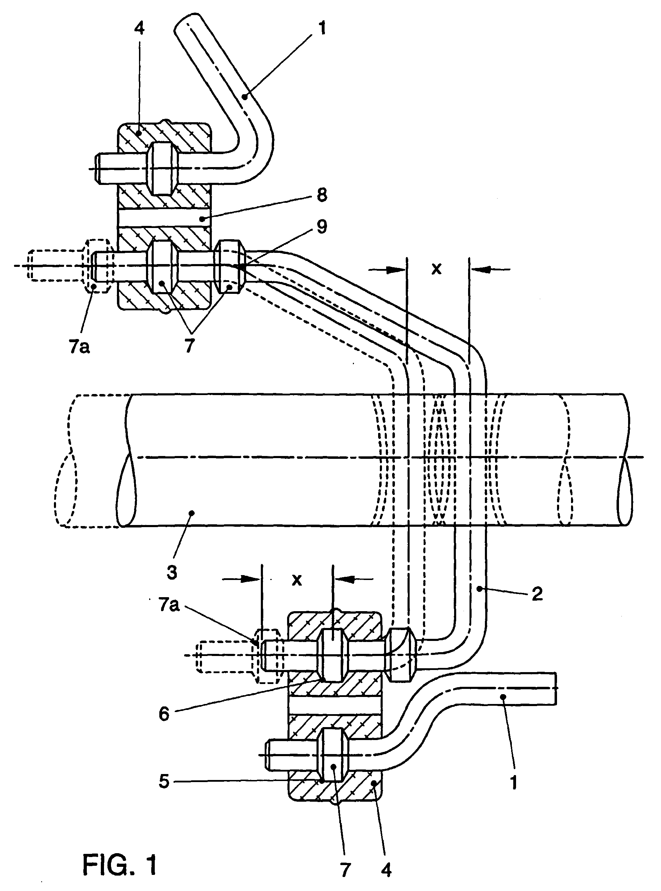

In den Figuren 1 und 2 ist eine erste Ausführungsform der Befestigungsvorrichtung dargestellt. Dort ist mit dem Bezugszeichen 1 die erste Befestigungseinrichtung bezeichnet, die zweifach vorgesehen ist (oben und unten in der Figur) und die die Festlegung an der Karosserie eines Kfz schafft. Die zweite Befestigungseinrichtung 2 ist zur Festlegung einer Abgasanlage 3 vorgesehen, die in der Figur schematisch als Abgasrohr dargestellt ist. Zwischen den beiden Befestigungseinrichtungen 1 und 2 ist jeweils eine Verbindungseinrichtung 4 vorgesehen, die vorzugsweise aus einem elastischen Werkstoff besteht, um eine Schwingungsentkopplung zwischen den Befestigungseinrichtungen 1 und 2 zu erreichen.

Die Befestigungseinrichtungen 1 und 2 weisen an ihren Endabschnitten jeweils eine oder mehrere Fixierungsabschnitte 7 bzw. 7a auf, die vorzugsweise als Verdickung ausgeführt sind. Diese Fixierungsabschnitte 7 und 7a sind gegenüber dem kreisrunden Querschnitt der Befestigungseinrichtungen 1 und 2 im Durchmesser vergrößert und beidseitig mit einer Abschrägung 9 versehen, um das Einführen der Befestigungseinrichtung 1 und 2 in die Verbindungseinrichtung 4 zu erleichtern.

Zur Aufnahme der Fixierungsabschnitte 7 und 7a weist die elastische Verbindungseinrichtung 4 zumindest jeweils einen Aufnahmeabschnitt 6 auf, in den die Befestigungseinrichtung 1 oder 2 eingesteckt wird, wobei zwischer dem Fixierungsabschnitt 7 bzw. 7a und einem dementsprechenden Hohlraum eine formschlüssige Verbindung hergestellt wird.

Durch das Vorsehen mehrerer Fixierungsabschnitte 7, 7a an den Endabschnitten der Befestigungseinrichtung 2 kann wahlweise einer dieser Fixierungsabschnitte 7, 7a mit dem Aufnahmeabschnitt 6 in Eingriff gebracht werden.

In der Figur 1 sind an der Befestigungseinrichtung 2 an jedem Endabschnitt jeweils zwei Fixierungsabschnitte 7 dargestellt. Die durchgezogenen Linien betreffen dabei eine Befestigungseinrichtung 2, die sich in der rechten Position (bezogen auf die Figur 1) befindet, während die gestrichelten Linien eine Befestigungseinrichtung 2 betreffen, die in der linken Position angeordnet ist. In der rechten Position gelangt die rechte Verdickung 7 an der Befestigungseinrichtung 2 in Eingriff mit dem Aufnahmeabschnitt 6 der Verbindungseinrichtung 4. In der linken Position gelangt die linke Verdickung 7a in Eingriff mit dem Aufnahmeabschnitt 6 der Verbindungseinrichtung 4.

Durch diese Ausbildung ist es möglich, die Position der Abgasanlage 3 zu verändern, ohne dabei die Position der Anlenkung an der Karosserie oder die Position der Befestigungseinrichtung(en) 1 zu verändern. Lediglich die Befestigungseinrichtung 2 wird in ihrer Position verändert.

An der Verbindungseinrichtung 4 ist eine Hohlraum 8 oder sind mehrere Hohlräume (nicht dargestellt) vorgesehen, um die Flexibilität zu erhöhen.

Die Ausbildung der Fixierungsabschnitte 7 bzw. 7a an der zweiten Befestigungseinrichtung 2 ist nicht zwingend; ebenso können diese Fixierungsabschnitte an der ersten Befestigungseinrichtung 1 vorgesehen werden, um die Veränderung der Position der Abgasanlage 3 zu ermöglichen.

Die Fixierungsabschnitte 7 bzw. 7a sind in Längsrichtung bzw. Eingriffsrichtung der Befestigungseinrichtung 1 oder 2 angeordnet. Der Abstand zwischen den Fixierungsabschnitten 7 ist dabei so gewählt, daß der Abstand "x" einstellbar ist, wie er zwischen zwei möglichen Positionen der Abgasanlage 3 erwünscht ist.

In der Figur 2 sind die beiden Positionen der zweiten Befestigungseinrichtung 2, die in der Figur 1 gleichzeitig dargestellt sind, in den beiden Figuren 2a und 2b getrennt dargestellt. In der Figur 2a ist eine Position gezeigt, in der sich die zweite Befestigungseinrichtung 2 in der untersten Position (mit Bezug zu der Zeichnung) befindet, während sie sich in der Figur 2b in der obersten Position befindet.

Aus dem bisher beschriebenen wird klar, daß auch eine größere Anzahl (drei und mehr) von Fixierungsabschnitten 7 an den Endabschnitten der Befestigungseinrichtungen 1 oder 2 vorgesehen sein kann, sofern eine größere Flexibilität in der Anzahl der Einstellpositionen gewünscht ist.

Schließlich sind in der Figur 3 zwei weitere Ausführungsformen der vorliegenden Erfindung dargestellt. Dort ist die Verbindungsvorrichtung 14 jeweils, die zur elastischen Verbindung von Befestigungseinrichtungen 11 und 12 vorgesehen ist, mit einem Aufnahmeraum für eine Befestigungseinrichtung 11/12 ausgebildet. In den schematischen Darstellungen sind nur Teilansichten der Befestigungsvorrichtung dargestellt.

In der rechten Darstellung ist die Verbindungsvorrichtung 14 mit einem Aufnahmeabschnitt 15/16 versehen, der es erlaubt, die Befestigungseinrichtung 11/12 in unterschiedlichen Positionen relativ zu der Verbindungsvorrichtung 14 einzusetzen. Zwischen der Verbindungsvorrichtung 14 und der Befestigungseinrichtung 11/12 liegt dann ein Formschluß vor, der durch die Fixierungsabschnitte (Verdickungen) 17 und die entsprechend ausgebildeten Aufnahmeabschnitte 15/16 (Hohlräume) in der Verbindungsvorrichtung 14 geschaffen ist.

In der linken Darstellung ist die Verbindungsvorrichtung 14 mit einer noch größeren Anzahl von Aufnahmeabschnitten 15/16 versehen, um die Flexibilität in der Auswahl der Positionen der eingesteckten Befestigungseinrichtung 11/12 zu erhöhen. So ist durch eine Erweiterung 10 (gestrichelt eingezeichnet) die Verbindungsvorrichtung 14 soweit vergrößert, daß in der dargestellten Form drei Fixierungsabschnitte 17 innerhalb der Verbindungsvorrichtung 14 angeordnet sind. Sollen zumindest zwei dieser Fixierungsabschnitte 17 mit der Verbindungsvorrichtung 14 an den Aufnahmeabschnitten 15/16 in Eingriff stehen, ergeben sich dadurch drei unterschiedliche Positionen zwischen Befestigungseinrichtung 11/12 und Verbindungsvorrichtung 14.

Die Wirkungsweise der Ausführungsformen der Verbindungsvorrichtung 14 nach der Figur 3 entspricht der Wirkungsweise der Befestigungsvorrichtungen nach den Figuren 1 und 2.

Durch das Vorsehen der Möglichkeit, die axiale Position einer Befestigungseinrichtung 1, 2 oder 11, 12 innerhalb einer Verbindungseinrichtung 4 bzw. Verbindungsvorrichtung 14 einzustellen, läßt sich die Lage einer Abgasanlage 3 einfach einstellen bzw. anpassen.

Für unterschiedliche Kfz-Modelle lassen sich damit gleiche Abgasanlagen 3 einsetzen, so daß die Verwendung dieser Gleichteile zu einer Kosteneinsparung führt. Trotzdem an den unterschiedlichen Kfz-Modellen eine unterschiedliche Positionierung der Abgasanlage 3 vorliegt, kann durch Verwendung der erfindungsgemäßen Befestigungsvorrichtung bzw. Verbindungsvorrichtung eine einheitliche Vorrichtung zur Befestigung der Abgasanlage eingesetzt werden.

### BEZUGSZEICHENLISTE

- 1: erste Befestigungseinrichtung
- 2: zweite Befestigungseinrichtung
- 3: Abgasanlage
- 4: Verbindungseinrichtung
- 5: Aufnahmeabschnitt
- 6: Aufnahmeabschnitt
- 7: Fixierungsabschnitt
- 7a: Fixierungsabschnitt
- 8: Hohlraum
- 9: Abschrägung(en)
- 10: Erweiterung
- 11: Befestigungseinrichtung
- 12: Befestigungseinrichtung
- 13: Abgasanlage
- 14: Verbindungseinrichtung
- 15: Aufnahmeabschnitt
- 16: Aufnahmeabschnitt
- 17: Fixierungsabschnitt

## Patentansprüche

1. Vorrichtung zur Befestigung einer Abgasanlage (3) an einem Kraftfahrzeug, mit: einer ersten Befestigungseinrichtung (1), die eine Halterung an einer Karosserie des Kraftfahrzeuges herstellt,
einer zweiten Befestigungseinrichtung (2), die eine Halterung an einer Abgasanlage (3) des Kraftfahrzeuges herstellt, und
einer Verbindungseinrichtung (4), die die beiden Befestigungseinrichtungen (1, 2) miteinander verbindet, wobei die Verbindungseinrichtung (4) zumindest einen Aufnahmeabschnitt (5, 6) für jede der Befestigungseinrichtungen (1, 2) aufweist,
**dadurch gekennzeichnet**, daß
zumindest eine der Befestigungseinrichtungen (1, 2) eine Mehrzahl von Fixierungsabschnitten (7, 7a) aufweist, wobei zumindest ein Fixierungsabschnitt (7, 7a) mit dem zumindest einen Aufnahmeabschnitt (5, 6) in Eingriff bringbar ist.

2. Vorrichtung nach Anspruch 1, dadurch gekennzeichnet, daß die Fixierungsabschnitte (7, 7a) an der ersten Befestigungseinrichtung (1) vorgesehen sind.

3. Vorrichtung nach Anspruch 1 oder 2, dadurch gekennzeichnet, daß die Fixierungsabschnitte (7, 7a) an der zweiten Befestigungseinrichtung (2) vorgesehen sind.

4. Vorrichtung nach einem der Ansprüche 1 bis 3, dadurch gekennzeichnet, daß die Fixierungsabschnitte (7, 7a) an einer Befestigungseinrichtung (1, 2) in Längsrichtung beabstandet vorgesehen sind.

5. Vorrichtung nach einem der Ansprüche 1 bis 4, dadurch gekennzeichnet, daß die Verbindungseinrichtung (4) elastisch ausgeführt ist.

6. Vorrichtung nach einem der Ansprüche 1 bis 5, dadurch gekennzeichnet, daß die Befestigungseinrichtungen (1, 2) im Eingriffsbereich in Form von im wesentlichen zylindrischen Körpern ausgebildet sind.

7. Vorrichtung nach einem der Ansprüche 1 bis 6, dadurch gekennzeichnet, daß die Fixierungsabschnitte (7, 7a) jeweils in Form einer Erhebung an der Befestigungseinrichtung (1, 2) ausgebildet sind sowie die Aufnahmeabschnitte (5, 6) dazu formschlüssige Aufnahmeräume ausbilden.

8. Vorrichtung nach einem der Ansprüche 1 bis 7, dadurch gekennzeichnet, daß die Fixierungsabschnitte jeweils in Form einer Vertiefung an der Befestigungseinrichtung ausgebildet sind sowie die Aufnahmeabschnitte dazu formschlüssige Erhebungen ausbilden.

9. Vorrichtung (14) zur elastischen Verbindung von Befestigungseinrichtungen 11,12) für eine Abgasanlage (3) an einem Kraftfahrzeug, mit:
zwei Aufnahmeabschnitten (15, 16), die jeweils für die Aufnahme einer Befestigungseinrichtung (11, 12) vorgesehen sind,
**dadurch gekennzeichnet**, daß
zumindest ein Aufnahmeabschnitt (15, 16) eine Mehrzahl von in Eingriffsrichtung der Befestigungseinrichtung (11, 12) zueinander beabstandet angeordneten Fixierungsabschnitten (17) aufweist, die wahlweise mit der Befestigungseinrichtung (11, 12) formschlüssig in Eingriff bringbar sind.

10. Vorrichtung nach Anspruch 9, dadurch gekennzeichnet, daß der Aufnahmeabschnitt (15, 16) einen Hohlraum zur Aufnahme der Befestigungseinrichtung (11, 12) aufweist und daß die Fixierungsabschnitte (17) in Form von Verengungen oder Erweiterungen des Hohlraumes ausgebildet sind.
